Europäisches Patentamt

European Patent Office

Office européen des brevets

(11) Publication number: **0 105 668**
**B1**

(12)

# EUROPEAN PATENT SPECIFICATION

(45) Date of publication of patent specification: **18.03.87**  (51) Int. Cl.⁴: **H 01 B 15/00**

(21) Application number: **83305607.0**

(22) Date of filing: **21.09.83**

(54) **Procedure and apparatus for removing one or more layers of strands from multistrand cable.**

(30) Priority: **28.09.82 US 425923**

(43) Date of publication of application:
**18.04.84 Bulletin 84/16**

(45) Publication of the grant of the patent:
**18.03.87 Bulletin 87/12**

(84) Designated Contracting States:
**CH DE FR GB IT LI**

(56) References cited:
**FR-A-2 351 475**
**GB-A- 554 257**
**US-A-2 366 271**

(73) Proprietor: **ALCAN INTERNATIONAL LIMITED**
**1188 Sherbrooke Street West**
**Montreal Quebec H3A 3G2 (CA)**

(72) Inventor: **Branchaud, Maurice**
**3180, Boul. Neilson**
**Ste-Foy Quebec (CA)**

(74) Representative: **Pennant, Pyers et al**
**Stevens, Hewlett & Perkins 5 Quality Court**
**Chancery Lane**
**London, WC2A 1HZ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

### Background of the Invention

This invention relates to procedures and apparatus for stripping one or more layers of strands from multistrand cable such as electrical conductor cable, to remove a defective strand.

In the production of multistrand conductor cable, a plurality of conductive metal (e.g. aluminium or copper) wire strands are wound on a core, the strands being arranged in one or more layers and each strand extending helically around the core. It sometimes happens that one of the strands is broken or otherwise defective, rendering the cable unacceptable for use; and frequently, in such case (especially if the strands are of noncircular cross-section), the strand cannot be repaired. The layer containing the defective strand must then be removed, together with any layers of strands disposed outwardly thereof, to enable the core (and any strand layers underlying the defective strand) to be salvaged and rewound with sound outer strands, since it would be economically disadvantageous to scrap the whole cable.

Heretofore, the removal of a layer or layers of strands from multistrand cable has been accomplished manually, in a costly and time-consuming operation. For example, it has typically taken as much as 120 to 240 man-hours to strip strands from a single reel of cable, i.e. occupying four or five men for 24 to 48 working hours each. Machines for stripping strands from cables have been proposed. For instance, FR—A—2,351,475 discloses a machine for separating steel cores of used overhead electrical cable from strands of copper or aluminium wire wound helically around the cores. According to the disclosure, the cable is pulled such that the core of the cable passes through a separating component and the strands are deformed away from the core at the mouth of the separating component. The deformed strands are then cut off by means of a rotary cutting tool cooperating with a plane face provided on the separating component. The pulling force required in using the invention of FR—A—2,351,475 must be sufficient not only to cause the outward deformation of the strand ends by the separating component but also to overcome the frictional resistance of those strand ends in contact with the separating component. US—A—2,366,271 discloses an apparatus for stripping wire braids from shielded cables. The apparatus employs a rotatable cutting disc with a bevelled, undulating cutting edge which cooperates with fixed blade to sever the braid as the cable is drawn past. The severed braid is then shed by the cable. In practice, however, the removal of strands from cable in a rapid and continuous manner with a reduced number of personnel is still awaited by the industry. It would be especially desirable to perform such stripping in line with cable stranding apparatus for immediately and continuously winding replacement strands on the sound stripped portion of the cable.

### Summary of the Invention

The present invention broadly contemplates the provision of procedure for continuously removing, from a multistrand cable having a core portion, at least one layer of metal wire strands wound helically around the core portion.

In accordance with the invention, this procedure comprises the steps of

(a) continuously advancing the cable longitudinally along a generally rectilinear path while

(b) at a locality in the path, continuously cutting the strands of the said layer,

characterized in that the cable is advanced to the said locality where the strands of the said layer still in a helically-wound condition, and any strands disposed outwardly thereof on the cable, are continuously cut by

(i) continuously rotating a circular saw-blade having peripheral strand-cutting teeth while

(ii) maintaining said saw-blade in engagement with the cable at the said locality such that the saw-blade rotates in a plane containing said path and the said teeth intersect the cable only to the depth of the said layer;

and wherein the cable is advanced in said path, beyond said locality, through a guide positioned in surrounding relation to said path and having an entry opening into which said cable passes, immediately beyond said saw-blade, with an external wall flaring away from said opening in the direction of cable advance.

It will be understood that the term "core portion" refers to that part of the cable disposed inwardly of the strand layer or layers to be removed, and that the term "plane containing the path of cable advance" refers to a plane containing the longitudinal geometric axis of a cable advancing in that path.

With the described disposition of the saw-blade (which is rotating in a plane containing the path of cable advance, to minimize the depth of metal that must be cut to remove any given layer, and is also preferably positioned above the cable, to avoid possible fouling of the saw mechanism by strand scrap), the saw teeth are moving lengthwise of the cable as they intersect and cut the cable strands. Thus, the saw cuts into the cable (i.e. into the strand layer or layers to be removed) along a line extending parallel to the longitudinal geometric axis of the cable. Each individual strand, being helically wound around the cable core portion, crosses this cut line repeatedly, viz. once in each helical turn of the strand, as the cable advances past the saw. Consequently, the saw severs each turn of each strand in the layer or layers to be removed, cutting the strands into short lengths which can readily be caused to fall clear of the cable core portion and are easy to handle as scrap.

As a further feature of the invention, the cable is advanced in its path, beyond the aforementioned locality, through a guide positioned in surrounding relation to the cable path and having an entry opening, into which the cable passes, immediately beyond the saw, with an external wall flaring away from the opening in the direction of cable advance. This guide serves to stabilize the location of the cable relative to the saw, so that the saw penetrates fully through the strand layer or layers to be removed but does not cut into the core portion of the cable, and secondarily serves to push the cut strand scraps away from the core portion.

With the described procedure, a defective or broken strand can be removed from a multistrand cable in a rapid and continuous manner requiring fewer personnel than heretofore needed for manual stripping of defecting strands from cable. The saw is positioned, in relation to the advancing cable, to intersect and remove the layer of strands including the defective strand (as well as any strand layers disposed outwardly thereof) without cutting any portion of the cable inwardly of that layer.

The removal of strands in accordance with the invention can be performed in line with an operation for continuously winding new strands on the remaining core portion of the cable, i.e. after the layer or layers including the defective strand have been removed, to replace the removed strands. Thus, the cable can be continuously advanced in its aforementioned path, beyond the locality at which it is engaged by the saw, to a second locality in the path at which a conventional stranding machine winds the replacement strands on the stripped core portion. In this way, strand removal and replacement can be accomplished in a single continuous line, with advantageous convenience and economy of operation.

The invention additionally embraces apparatus for removing, from a multistrand cable having a core portion at least one layer of metal wire strands wound helically around the core portion, which apparatus comprises

(a) drive means for continuously advancing the cable along a generally rectilinear path; and

(b) a cutting tool for continuously cutting the strands of the said layer from the cable at a locality in said path, characterized in that the cutting tool comprises a continuously rotatable circular saw-blade having peripheral teeth for cutting strands which blade is disposed adjacent said path at said locality for rotation in a plane containing said path, and in that it further comprises a guide having an entry opening, into which said cable passes, disposed immediately beyond said locality, and an external wall 32 flaring away from said opening in the direction of advance of cable in said path and in surrounding relation to said path.

Further features and advantages of the invention will be apparent from the detailed description hereinbelow set forth, together with the accompanying drawings.

Brief Description of the Drawings

Fig. 1 is a simple schematic side elevational view of a line for replacing strands on multistrand cable, incorporating an illustrative embodiment of the invention;

Fig. 2 is an enlarged view of the embodiment of the strand-removing apparatus of the invention incorporated in the line of Fig. 1 taken along the line 2—2 of Fig. 1;

Fig. 3 is a side elevational view of the apparatus of Fig. 2, taken along the line 3—3 of Fig. 2;

Fig. 4 is a further enlarged fragmentary side elevational view of the apparatus of Figs. 2 and 3, partly in section, illustrating the performance of the procedure of the invention with that apparatus; and

Fig. 5 is a still further enlarged sectional view taken along the line 5—5 of Fig. 4.

Detailed Description

Referring to the drawings, the invention will be described as embodied in procedure for stripping, from a multistrand cable having a core portion, one or plural layers of aluminium wire strands wound helically around the core portion, e.g. to remove a defective strand in the innermost of the stripped layers, and replacing the removed strands.

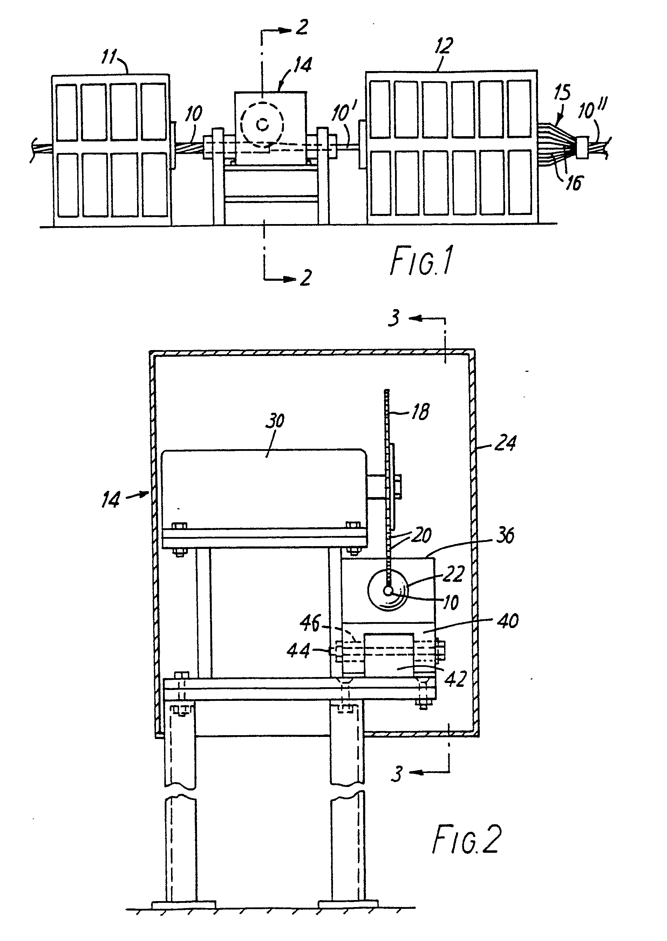

Fig. 1 illustrates a cable-handling line through which a multistrand cable 10 as described above is continuously advanced along a rectilinear path from left to right as seen on the drawing. The means provided in the line for thus advancing the cable may be generally conventional as heretofore used for advancing cable along a rectilinear path through a stranding line, and accordingly need not be described in detail; stated generally, such means may include devices for imparting drive and tension as well as support to the cable, which devices may be disposed within the housings 11 and 12 of the illustrated line and/or may be positioned beyond the extremities of the portion of the line shown in Fig. 1.

Stated generally, the line includes a stripping unit 14, embodying particular features of the invention as described below, for removing layers of strands from the core portion 10' of the multistrand cable 10, and a stranding machine (partly enclosed within the housing unit 12, and partly indicated schematically at 15) for winding new strands 16 on the core portion 10' to replace those removed by the stripping unit 14 and thereby to produce a reconstituted multistrand cable 10". The structure and operation of the stranding machine may, again, be entirely conventional, and therefore require no description. It will be understood that the cable advances continuously and successively through the stripping unit 14 and the stranding machine 15, which are arranged in tandem to remove and replace layers of strands in an essentially unitary, continuous operation.

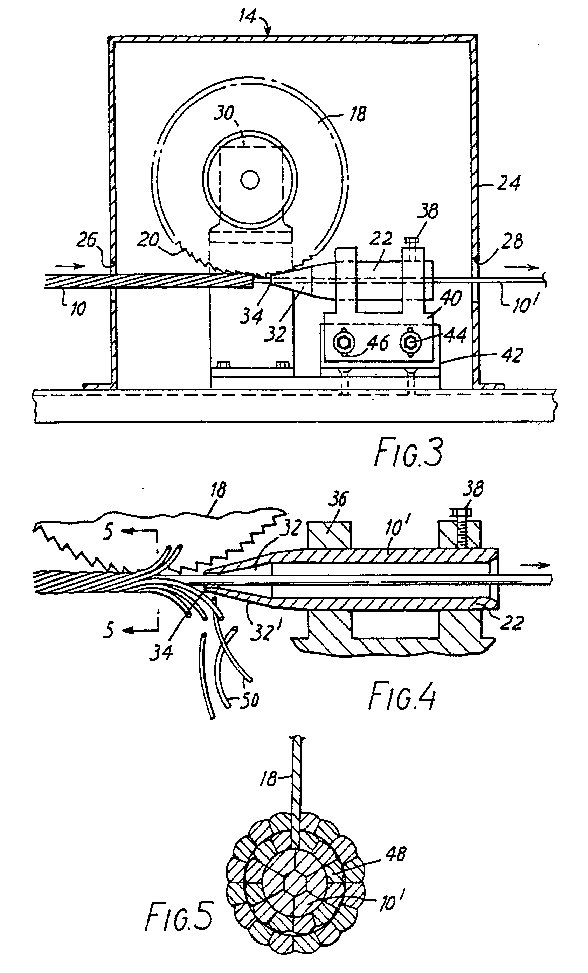

In accordance with the invention, the stripping unit 14 (as best seen in Figs. 2 and 3) comprises a circular saw 18 bearing a continuous succession of peripheral teeth 20 capable of cutting the aluminium strands of the cable 10 (e.g. carbide steel teeth), and a guide structure 22 disposed in the path of advance of the cable immediately beyond the saw, both supported within a housing 24 having inlet and outlet apertures 26 and 28 to accommodate, with clearance, the advancing cable. The saw 18 is mounted above the path of advance of the cable, for rotation in a vertical plane containing that path (the axis of saw rotation perpendicular to the latter plane), and is driven for continuous rotation by a motor 30 also supported within the housing 14.

The guide structure 22 is a hollow, open-ended, generally cylindrical metal member, disposed in surrounding relation to the path of advance of the cable, and having an inlet extremity 32 tapering toward the saw. This inlet extremity, as shown, is of frustoconical configuration, terminating in an apical entry opening 34 into which the stripped cable core portion 10' passes just beyond the saw. Its external wall 32' flares outwardly from the opening 34 in the direction of cable advance. The guide structure is mounted in a bracket 36 and secured therein by a set screw 38; a depending yoke portion 40 of the bracket 36 overlies a fixed mount 42 and is secured thereto by bolts 44 extending through vertical slots 46 in the yoke portion 40 to enable adjustment of the vertical position of the guide structure relative to the saw 18.

In the operation of the described apparatus, the saw teeth function to intersect and to cut the layer or layers of helically wound strands desired to be removed from the cable being advanced past the saw; to this end it is necessary that the saw be so positioned in relation to the cable that the teeth penetrate the cable only to the depth of such layer or layers and do not cut into the core portion which is to be recovered. The requisite relative positioning of the cable and the saw is effected, in the illustrated embodiment of the apparatus, by the guide structure 22. The entry opening 34 of the guide structure is made just slightly larger than the diameter of the core portion 10' to be recovered, preferably being between about 0.6 mm and about 2.5 mm larger than the core portion of 10'; the vertical position of the opening 34 relative to the saw is adjusted (i.e. by moving the bracket 36 up or down relative to the bolts 44 as permitted by the slots 46) so that the guide structure surrounding opening 34, acting on the cable, establishes and maintains the proper cable positioning relative to the saw, if necessary deflecting the cable somewhat above or below a strictly horizontal rectilinear path at the point of engagement with the saw. In order to position the cable stably and accurately for cutting of the strands by the saw teeth, the portion of the guide structure 22 surrounding the opening 34 must be located very close to the saw, being preferably disposed 0.4 mm from the locus of rotation of the tips of the saw teeth.

Different guide structures 22, respectively having entry openings 34 of different diameters, may be used interchangeably to enable the apparatus to strip cables wherein core portions of different diameters are to be recovered, it being understood that these different guide structures may be substantially identical except in respect of the diameter of opening 34. The set screw 38 permits ready removal of the guide structure and replacement with another in the bracket 36, and also facilitates accurate longitudinal positioning of the guide structure relative to the saw teeth.

The practice of the procedure of the invention with the foregoing apparatus is illustrated in Figs. 4 and 5 as employed to remove two concentric layers of helically wound aluminium wire strands 48 (each strand being of either trapezoidal or round cross-section) from a multistrand cable having a core portion 10' constituted of compacted strands. It will be understood that if the procedure were performed only to remove the outer of the two layers of strands 48, then the inner layer of strands 48 as well as the compacted central strands would be considered to constitute the core portion within the meaning of that term as herein used.

In this procedure, the saw and the advancing cable are maintained in the desired relative positions by the guide structure 22, such that the saw teeth (as best seen in Fig. 5) fully penetrate the two layers of strands 48 which are to be removed from the advancing cable but do not cut into the core portion 10. In accordance with the invention, with this relative positioning maintained by the guide structure, the saw 18 is continuously rotated counterclockwise by the motor 30, while the cable is continuously advanced past the saw (at a speed of not more than 45 metres per minute). The saw teeth, moving lengthwise of the cable so as to intersect the strands 48, cut into the cable along a continuous line parallel to the geometric axis of the cable. Since each strand 48, being wound helically around the core portion of the cable, repeatedly crosses the line cut by the saw teeth, each strand is repetitively severed by the saw teeth (i.e. once in each helical turn), with the result that the teeth chop up the strands 48 into short scrap pieces 50 (Fig. 4) each equal in length in one helical turn of the strand. The scrap pieces 50 fall readily from the cable core portion 10', being pushed away from the core portion by the nose of the guide structure 22 as the cable advances, and may be collected in a suitable receptacle (not shown) beneath the saw for remelting or other disposal. However, the core portion remains uncut and passes in sound condition through and beyond the guide structure 22, i.e. into and through the housing 12 (Fig. 1) where the stranding machine 15 winds replacement strands 16 onto the core portion, viz. to replace the removed layers of strands 48.

During the operation of the saw, an oil such as that commercially available under the trade mark "Mazola" is sprayed lightly on the saw to prevent aluminium sawdust from accumulating on the saw teeth. This oil may be applied, for example, by an oil pump (not shown) attached to the end of the motor shaft.

In an example of apparatus of the type described, the saw 18 had a diameter of 30 cm, with 200 carbide steel teeth, and was driven by a 7.5 kW, 3,600-r.p.m. motor. The apparatus including this saw has been successfully used to strip one or more layers of strands from multistrand aluminium cable, e.g. wherein the strands have either trapezoidal or round cross-section. Three men working two hours each (for a total of six man hours) can strip strands from an entire reel of cable utilizing the present procedure and apparatus, whereas four or five men working 24 hours or more each would be required to accomplish the same result by the manual operation heretofore employed.

**Claims**

1. A procedure for removing, from a multistrand cable (10) having a core portion (10'), a layer of metal wire strands wound helically around the core portion, comprising the steps of

(a) continuously advancing the cable longitudinally along a generally rectilinear path while

(b) at a locality in the path, continuously cutting the strands of the said layer,

characterized in that the cable is advanced to the said locality where the strands of the said layer still in a helically-wound condition, and any strands disposed outwardly thereof on the cable, are continuously cut by

(i) continuously rotating a circular saw-blade (18) having peripheral strand-cutting teeth (20) while

(ii) maintaining said saw blade in engagement with the cable at the said locality such that the saw-blade rotates in a plane containing said path and the said teeth intersect the cable only to the depth of the said layer;

and wherein the cable is advanced in said path, beyond said locality, through a guide (22) positioned in surrounding relation to said path and having an entry opening (34), into which said cable passes, immediately beyond said sawblade, with an external wall (32) flaring away from said opening in the direction of cable advance.

2. A procedure according to claim 1, wherein said cable (10) has plural layers of said strands arranged concentrically around said core portion, and wherein said teeth (20) intersect said cable to the depth of at least two of said layers, for removing from the cable the strands of said two layers.

3. A procedure according to claim 1, wherein said opening of said guide (22) is between about 0.6 mm and 2.5 mm larger than the diameter of the cable inwardly of said layer and is disposed about 0.4 mm beyond the locus of rotation of said sawblade (18), and wherein said cable advances in said path at a speed of not more than about 45 m/min.

4. A procedure according to any one of claims 1 to 3, wherein said saw-blade (18) rotates in a vertical plane above said path.

5. A procedure according to claim 1, wherein the multistrand cable (10) includes a defective strand, in which the teeth of the saw-blade intersect the cable only to the depth of the layer of strands containing the defective strand, such that the sawblade (18) successively cuts each helical turn of said defective strand of all other strands disposed in and outwardly of the last-mentioned layer.

6. A procedure according to claim 5, which further includes the step of continuously winding, at a second locality in the path of advance of the cable (10), a new layer or layers of strands (16) on said cable to replace the layers cut from the cable.

7. An apparatus for removing, from a multistrand cable (10) having a core portion (10') at least one layer of metal wire strands wound helically around the core portion, which apparatus comprises

(a) drive means for continuously advancing the cable along a generally retilinear path; and

(b) a cutting tool for continuously cutting the strands of the said layer from the cable at a locality in said path, characterized in that the cutting tool comprises a continuously rotatable circular sawblade (18) having peripheral teeth (20) for cutting strands which blade is disposed adjacent said path at said locality for rotation in a plane containing said path, and in that it further comprises a guide (22) having an entry opening (34), into which said cable passes, disposed immediately beyond said locality, and an external wall (32) flaring away from said opening in the direction of advance of cable in said path and in surrounding relation to said path.

8. An apparatus according to claim 7, characterized in that it further comprises a stranding machine (15) for continuously winding new strands (16) on a cable, to replace strands (50) cut therefrom by the saw-blade, at a locality in said path beyond the locality at which the strands are cut, in the direction of cable advance.

9. An apparatus according to claim 7 or claim 8, wherein said plane is a vertical plane and the sawblade is positioned above the path of the cable.

**Revendications**

1. Procédé pour enlever d'un câble multitorons (10) qui présente une portion formant âme (10'), une couche de torons en fils métalliques bobinés en hélice autour de la portion formant âme, comportant les étapes de:

(a) faire avancer la câble longitudinalement en continu le long d'un chemin de forme générale rectiligne tout en

(b) coupant en continu, à un emplacement du chemin, les torons de ladite couche,

caractérisé en ce que l'on fait avancer le câble jusqu'au dit emplacement où les torons de ladite couche, encore en condition bobinés en hélice, et tous les torons qui sont disposés à l'extérieur de cette couche sur le câble, sont coupés en continu,

(i) en faisant tourner en continu une lame de scie circulaire (18) qui présente des dents périphériques (20) pour couper les torons, tout en

(ii) maintenant ladite lame de scie en contact avec le câble au dit emplacement de façon telle que la lame de scie tourne dans un plan contenant ledit chemin et que lesdits dents n'intersectent le câble que jusqu'à la profondeur de ladite couche;

et dans lequel on fait avancer le câble sur ledit chemin, au-delà dudit emplacement, à travers un guide (22) placé de façon à entourer ledit chemin et présentant une ouverture d'entrée (34), dans laquelle passe ledit câble, immédiatement au-delà de ladite lame de scie, avec une paroi-extérieure (32) qui va en s'évasant depuis ladite ouverture, dans la direction de l'avancement du câble.

2. Procédé selon la revendication 1, dans lequel ledit câble (10) comporte plusieurs couches desdits torons disposées concentriquement autour de ladite portion formant âme et dans lequel lesdites dents (20) intersectent ledit câble jusqu'à la profondeur d'au moins deux desdites couches, pour enlever du câble les torons des deux dites couches.

3. Procédé selon la revendication 1, dans lequel ladite ouverture dudit guide (22) est de environ 0,6 mm à 2,5 mm plus grande que le diamètre du câble à l'intérieur de ladite couche et est disposée à environ 0,4 mm au-delà du lieu géométrique de rotation de ladite lame de scie (18), et dans lequel ledit câble avance sur ledit chemin à une vitesse non supérieure à environ 45 m/min.

4. Procédé selon une quelconque des revendications 1 à 3, dans lequel ladite lame de scie (18) tourne dans un plan vertical au-dessus dudit chemin.

5. Procédé selon la revendication 1, dans lequel le câble multitorons (10) comporte un toron défectueux dans lequel les dents de la lame de scie n'intersectent le câble que jusqu'à la profondeur de la couche de torons contenant le toron défectueux, de façon telle que la lame de scie (18) coupe successivement chaque spire hélicoïdale dudit toron défectueux et de tous les autres torons disposés dans la couche mentionnée en dernier lieu et à l'extérieur de cette couche.

6. Procédé selon la revendication 5, comportant en outre l'étape de bobiner en continu, à un second emplacement sur le chemin de l'avancement du câble (10), une nouvelle couche ou des nouvelles couches de torons (16) sur ledit câble pour remplacer les couches coupées et enlevées du câble.

7. Appareil pour enlever, d'un câble multitorons (10) présentant une portion formant âme (10'), au moins une couche de torons de fils métalliques bobinés en hélice autour de la portion formant âme, ledit appareil comportant:

(a) des moyens d'entraînement pour faire avancer en continu le câble le long d'un chemin de façon générale rectiligne; et

(b) un outil de coupe pour enlever du câble les torons de ladite couche en les coupant en continu à un emplacement sur ledit chemin, caractérisé en ce que l'outil de coupe comporte une lame de scie circulaire tournant en continu (18) qui possède des dents périphériques (20) pour couper des torons; en ce que ladite lame est disposée près dudit chemin au dit emplacement pour tourner dans un plan contenant ledit chemin; et en ce qu'il comporte en outre un guide (22) qui présente une ouverture d'entrée (34) dans laquelle passe ledit câble, disposé immédiatement au-delà dudit emplacement, ainsi qu'une paroi extérieure (32) qui va en s'évasant depuis ladite ouverture, dans la direction d'avancement du câble sur ledit chemin et en entourant ledit chemin.

8. Appareil selon la revendication, 7 caractérisé en ce qu'il comporte en outre une machine à bobiner les torons (15) pour bobiner en continu de nouveaux torons (16) sur un câble pour remplacer les torons (50) qui en ont été coupés par la lame de scie, à un emplacement situé sur ledit chemin au-delà de l'emplacement auquel les torons sont coupés, dans la direction de l'avancement du câble.

9. Appareil selon la revendication 7 ou 8, dans lequel ledit plan est un plan vertical et la lame de scie est placée au-dessus du chemin du câble.

**Patentansprüche**

1. Verfahren zum Entfernen von einem ein Kernteil (10') aufweisenden, mehrlitzigen Kabel (10) eine Schicht von Metalldrahtlitzen, die schraubenförmig um den Kernteil gewickelt sind, umfassend die Verfahrensschritte des

(a) kontinuierlichen Vorbewegens des Kabels entlang einem im wesentlichen geradlinigen Weg, während

(b) an einer Stelle auf diesem Weg kontinuierlich die Litzen der genannten Schicht durchtrennt werden,

dadurch gekennzeichnet, dass das Kabel zu der genannten Stelle vorbewegt wird, wo die Kabel der genannten Schicht sich immer noch im schraubenförmig gewickelten Zustand befinden, und dass jede Litze, die ausserhalb der Schicht auf dem Kabel sich befindet, kontinuierlich geschnitten wird, durch

(i) kontinuierliches Drehen eines kreisförmigen Sägeblattes (18) mit am Umfang angeordneten Litzenschneidzähnen (20), während

(ii) das Sägeblatt an der genannten Stelle mit dem Kabel in Eingriff gehalten wird, so dass das Sägeblatt sich in einer Ebene dreht, in der der genannte Weg liegt, und dass die genannten Zähne nur bis zur Tiefe der genannten Schicht in das Kabel vorstossen;

wobei das Kabel auf dem genannten Weg über die genannte Stelle durch eine Führung (22) vorbewegt wird, die so angeordnet ist, dass sie den genannten Weg umgibt und eine Eintrittsöffnung (34) aufweist, die das Kabel unmittelbar hinter dem Sägeblatt durchläuft, wobei eine Aussenwand (32') sich von der Öffnung weg in Richtung der Kabelvorbewegung erweitert.

2. Verfahren nach Anspruch 1, bei dem das Kabel (10) eine Vielzahl von Schichten von Litzen hat, die konzentrisch um den Kernteil angeordnet sind, und bei dem die Zähne (20) bis zu der Tiefe von zumindest zwei der Schichten in das Kabel vordringt, um die Litzen von zwei Schichten vom Kabel zu entfernen.

3. Verfahren nach Anspruch 1, bei dem die Öffnung der Führung (22) zwischen 0,6 und 2,5 mm mehr beträgt als der Durchmesser des Kabels innerhalb der Schicht und bei der die Öffnung ungefähr 0,4 mm hinter der Drehstelle des Sägeblattes (18) liegt, und bei dem die Kabelvorbewegung auf dem genannten Weg mit einer Geschwindigkeit von nicht mehr als ungefähr 45 m/Min. erfolgt.

4. Verfahren nach einem der Ansprüche 1 bis 3, bei dem das Sägeblatt (18) sich in einer vertikalen Ebene oberhalb des Weges dreht.

5. Verfahren nach Anspruch 1, bei dem das mehrlitzige Kabel (10) eine beschädigte Litze enthält und die Zähne des Sägeblattes nur bis zur Tiefe der Schicht von Litzen in das Kabel eindringt, die die beschädigte Litze enthält, so dass das Sägeblatt (18) sukzessive jede schraubenförmige Windung der beschädigten Litze und aller anderen Litzen schneidet, inner- und ausserhalb der letzterwähnten Schicht angeordnet sind.

6. Verfahren nach Anspruch 5, bei dem weiterhin an einer zweiten Stelle des Vorbewegungsweges des Kabels (10) eine neue Schicht oder neue Schichten von Litzen (16) auf das Kabel gewickelt werden, um die vom Kabel weggeschnittenen Schichten zu ersetzen.

7. Vorrichtung zum Entfernen von einem mehrlitzigen Kabel (10) mit einem Kernteil (10') zumindest eine Schicht aus Metalldrahtlitzen, die schraubenförmig um den Kernteil gewickelt sind, welche Vorrichtung umfasst:

(a) Antriebsmittel zum kontinuierlichen Vorbewegen des Kabels entlang einem im wesentlichen geradlinigen Weg, und

(b) ein Schneidwerkzeug zum kontinuierlichen Schneiden der Litzen der genannten Schicht vom Kabel an einer Stelle des Vorbewegungsweges,

dadurch gekennzeichnet, dass das Schneidwerkzeug ein kontinuierlich sich drehendes kreisförmiges Sägeblatt (18) mit daran vorgesehenen Umfangszähnen (20) zum Schneiden der Litzen umfasst, wobei das Blatt neben dem Bewegungsweg an der genannten Stelle angeordnet ist, um sich in einer Ebene zu drehen, in der der Vorbewegungsweg liegt, und dass die Vorrichtung weiterhin eine Führung (22) mit einer Eintrittsöffnung (34) umfasst, durch die das Kabel verläuft und die unmittelbar hinter der genannten Stelle angeordnet ist, sowie eine Aussenwand (32'), die sich von der Öffnung weg in Richtung der Vorbewegung des Kabels auf dem genannten Weg erweitert und den Bewegungsweg umgibt.

8. Vorrichtung nach Anspruch 7, dadurch gekennzeichnet, dass sie weiterhin eine Wickelmaschine (15) zum kontinuierlichen Wickeln neuer Litzen (16) auf ein Kabel umfasst, um die durch das Sägeblatt weggeschnittenen Litzen (50) an einer Stelle auf dem Vorbewegungsweg des Kabels zu ersetzen, die hinter der Stelle liegt, wo die Litzen geschnitten wurden und zwar in Richtung der Vorbewegung des Kabels.

9. Vorrichtung nach Anspruch 7 oder 8, bei dem die genannte Ebene eine vertikale Ebene ist und das Sägeblatt oberhalb des Bewegungsweges des Kabels angeordnet ist.

FIG.1

FIG.2

FIG.3

FIG.4

FIG.5

2